# EUROPEAN PATENT APPLICATION

(11) **EP 1 808 736 A1**
(43) Date of publication of application: **18.07.2007**
(21) Application number: 05772902.2
(22) Date of filing: 19.08.2005
(51) Int. Cl.: G03G 15/20, C08J 5/18, C08L 79/08, F16C 13/00

(54) **FILM FOR PRESSURE ROLLER**

(30) Priority: 14.10.2004 JP 2004299541
(71) Applicant: Sumitomo Electric Fine Polymer, Inc., Sennan-gun, Osaka 590-0458 (JP)
(72) Inventor: SHOJI, Daisuke, c/o Sumitomo Elc. Fine Polymer Inc, Sennan-gun, Osaka 5900458 (JP); KATO, Chiaki, c/o Sumitomo Elc. Fine Polymer, Inc., Sennan-gun, Osaka 5900458 (JP); HABUKA, Masahiro, c/o Sumitomo Elc. Fine Poly. Inc, Sennan-gun, Osaka 5900458 (JP)
(74) Representative: Cross, Rupert Edward Blount
(86) International application number: PCT/JP2005/015150
(87) International publication number: WO 2006/040879

(57) **Abstract**

The invention aims to provide a film for a pressure roller, without requiring an adhesive layer and capable of maintaining or improving conventionally obtained characteristics such as a tensile strength, a tear strength and an excellent releasing property with a recording material. The invention provides a film for a pressure roller, including a polyimide layer in which fluorinated resin powder is dispersed. The fluorinated resin powder is dispersed in an amount of from 10 to 20 vol% in the polyimide layer, and has an average particle size of from 1 to 20 µm.

## Description

### TECHNICAL FIELD

The present invention relates to a film for a pressure roller in a fixing device for fixing a toner transferred onto a recording material, in an image forming apparatus utilizing an electrophotographic process, particularly in an image forming apparatus such as a copy machine or a laser printer.

### BACKGROUND TECHNOLOGY

In an image forming apparatus such as a copy machine or a laser printer, a known fixing device for fixing a toner transferred onto a recording material, includes a fixing roller serving as a heating rotary member, and a pressure roller serving as a pressurizing rotary member which is pressurized to the fixing roller.

A recording material (such as a transfer paper, a printing paper or an electrostatic recording paper) bearing an unfixed image (toner image) is introduced into pressurized nips between the rollers by rotation of these rollers. Then, upon passing through the pressurized nip, by a heat from the heating fixing roller and a pressure in the pressurized nip, the toner constituting the unfixed image is hot pressing fixed onto the recording material as a permanent image.

In the fixing device of such image forming apparatus, a film may be employed in the pressure roller.

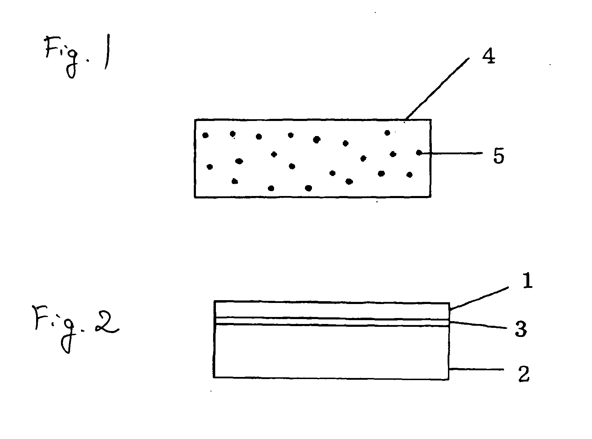

Such film is required to have a releasing property with the toner in addition to characteristics such as a tensile strength and a tear strength, and a film as illustrated in Fig. 2 is utilized.

More specifically, employed is a film prepared by adhering a sheet 1 of a fluorinated resin having an excellent releasing property with the toner and a polyimide sheet 2 by an adhesive material 3 (Patent Reference 1).

However, because of a low adhesive force of the fluorinated resin, the aforementioned film requires the adhesive material 3 for adhering the sheet 1 of fluorinated resin and the polyimide sheet 2, thus involving problems such as a peeling caused due to the adhesive material 3, an increase in the number of production steps, a quality control of plural layers including the adhesive layer, and a high cost.
Patent Reference 1: Japanese Patent Examined Publication JP-B-3032726.

### DISCLOSURE OF THE INVENTION

### PROBLEMS THE INVENTION IS TO SOLVE

The object to be accomplished by the present invention is to obtain a film for a pressure roller, not requiring an adhesive layer and capable of maintaining or improving conventionally obtained characteristics such as a tensile strength, a tear strength and an excellent releasing property with a recording material, and to obtain a pressure roller utilizing such film.

### MEANS FOR SOLVING THE PROBLEMS

Through an intensive investigation undertaken by the present inventor, it is found that the aforementioned object can be accomplished by dispersing fluorinated resin powder in polyimide, and the present invention has thus been made.

Thus, the present invention is to provide a film for a pressure roller, characterized in including a polyimide layer in which fluorinated resin powder is dispersed.

Conventionally, a fluorinated resin layer having an excellent releasing property is formed on the film surface in view of releasing property with the toner, however, it is found that the releasing property required in the film for pressure roller can be sufficiently satisfied, even without the layer of fluorinated resin, by dispersing fluorinated resin powder in polyimide.

Fig. 1 is a cross-sectional view of a film for pressure roller of the present invention, in which illustrated are a polyimide layer 4 and fluorinated resin powder 5 dispersed in the polyimide layer 4.

The fluorinated resin powder to be dispersed in the polyimide layer is, in consideration of the releasing property and the dispersibility in the polyimide layer, preferably a polymer or a copolymer of a monomer such as vinylidene fluoride, trifluoroethylene, tetrafluoroethylene, tetrafluoropropylene or hexafluoropropylene.

Second aspect of the invention corresponds to such preferred embodiment, and is to provide the film for pressure roller wherein the fluorinated resin powder is at least one of polymers and copolymers of a monomer which is vinylidene fluoride, trifluoroethylene, tetrafluoroethylene, tetrafluoropropylene or hexafluoropropylene.

The fluorinated resin powder is preferably dispersed in an amount of from 10 to 20 vol% in the polyimide layer. An amount of 10 vol% or higher allows to secure a sufficient releasing property with the toner, and an amount of 20 vol% or lower allows to secure an enough tensile strength and an enough tear strength of the film.

Third aspect of the invention corresponds to such preferred embodiment, and provides the film for pressure roller characterized in that the fluorinated resin powder is dispersed in an amount of from 10 to 20 vol% in the polyimide layer.

An average particle size of the fluorinated resin powder influences the surface roughness, thus eventually affecting the strength and the releasing property. Therefore, the average particle size is preferably within a range of from 1 to 20 µm.

Fourth aspect of the invention corresponds to such preferred embodiment, and provides the film for pressure roller characterized in that the fluorinated resin powder has an average particle size of from 1 to 20 µm.

In order to secure the enough tensile strength and the tear strength of the film for pressure roller, the film preferably has a thickness of from 30 to 150 µm. A thickness of 30 µm or larger allows to sufficiently secure the tensile strength and the tear strength, and a thickness of 150 µm or smaller reduces a heat capacity, thereby reducing a heat quantity required for heat fusing of the toner.

Fifth aspect of the invention corresponds to such preferred embodiment, and provides the film for pressure roller, characterized in having a thickness of from 30 to 150 µm.

The film for pressure roller described above has a releasing property required for the pressure roller, and does not cause a problem of peeling of the fluorinated resin layer in the course of use.

### ADVANTAGES OF THE INVENTION

The film for pressure roller of the present invention, being characterized in that the fluorinated resin powder is dispersed in polyimide, does not require formation of an adhesive layer, thus being free from the problem of peeling induced by the adhesive material. Furthermore, the number of steps in the production process is limited, also the quality control for the plural layers including the adhesive layer is limited to the quality control of single-layered film, and the cost is made low. Thus obtained is a film for pressure roller of a high and stable quality, having an excellent releasing property with the toner, and an improved inner-surface sliding property (slidability between the inner surface of the pressure roller and another component).

When the fluorinated resin powder is dispersed in the film for the pressure roller in an amount of 10 to 20 vol%, the releasing property with the toner can be satisfied, and the tensile strength and the tear strength of the film can be sufficiently secured.

Also when the film for the pressure roller has the fluorinated resin powder having an average particle size of from 1 to 20 µm, the releasing property with the toner can be satisfied, and the tensile strength and the tear strength of the film can be sufficiently secured.

Furthermore, when a thickness of the film for the pressure roller from 30 to 150 µm, the tensile strength and the tear strength of the film can be sufficiently secured.

### BRIEF DESCRIPTION OF THE DRAWINGS

Fig. 1 is a cross-sectional view illustrating an example of a film for a pressure roller of the present invention.
Fig. 2 is a cross-sectional view illustrating an example of a prior film for a pressure roller.

### DESCRIPTION OF SYMBOLS

- 1: sheet formed by fluorinated resin
- 2: sheet formed by polyimide
- 3: adhesive material
- 4: polyimide layer
- 5: fluorinated resin powder

### BEST MODE FOR CARRYING OUT THE INVENTION

### [Example 1]

To a tetrafluoroethylene-perfluoroalkoxyethylene copolymer (PFA, average particle size is about 10 µm) MP-311, manufactured by Mitsui-DuPont Fluorochemical Co., a polyimide varnish of U-varnish S301, manufactured by Ube Industries, Ltd. was added in proportions shown in Table 1, with respect to the total amount of the two.

The obtained mixtures were kneaded, molded into a cylindrical shape and dried.

Then these were sintered in an atmosphere of 400°C for 2 hours to obtain films for pressure roller.

Then the obtained films for pressure roller were investigated for tensile strengths in the axial direction and the circumferential direction of the pressure roller, by a tensile-compression tester AGS-500D, manufactured by Shimadzu Corp. Results are shown in Table 1.

**[Table 1]**

| sample No. | PFA addition amount | axial tensile | circumferential tensile |
|---|---|---|---|
| 1 | 0 vol% | 235 MPa | 274 MPa |
| 2 | 10 vol% | 147 MPa | 178 MPa |
| 3 | 20 vol% | 121 MPa | 132 MPa |
| 4 | 30 vol% | 96 MPa | 100 MPa |

Then the obtained films for pressure roller were investigated for elongations in the axial direction and the circumferential direction of the pressure roller, by a tensile-compression tester AGS-500D, manufactured by Shimadzu Corp. Results are shown in Table 2.

**[Table 2]**

| sample No. | PFA addition amount | axial tensile | circumferential tensile |
|---|---|---|---|
| 1 | 0 vol% | 49 % | 55 % |
| 2 | 10 vol% | 19 % | 30 % |
| 3 | 20 vol% | 18 % | 15 % |
| 4 | 30 vol% | 16 % | 15 % |

Then the obtained films for pressure roller were investigated for tear strengths in the axial direction and the circumferential direction of the pressure roller, by a tensile-compression tester AGS-500D, manufactured by Shimadzu Corp. Results are shown in Table 3.

**[Table 3]**

| sample No. | PFA addition amount | axial tensile | circumferential tensile |
|---|---|---|---|
| 1 | 0 vol% | 198 N/mm | 210 N/mm |
| 2 | 10 vol% | 155 N/mm | 136 N/mm |
| 3 | 20 vol% | 61 N/mm | 56 N/mm |
| 4 | 30 vol% | 57 N/mm | 53 N/mm |

Then, films for pressure roller of total lengths of 100 mm and 10 mm were obtained by a process as same as the above described process. Subsequently, the films for pressure roller were investigated for buckling load, by a tensile-compression tester AGS-500D, manufactured by Shimadzu Corp. In the measurement, a belt of φ32.3 (thickness 90 µm) was compressed in the axial direction, and a maximum load at the buckling was taken as a buckling load. Results are shown in Table 4.

**[Table 4]**

| sample No. | PFA addition amount | total length 100 mm | total length 10 mm |
|---|---|---|---|
| 1 | 0 vol% | 80 N | 64 N |
| 2 | 10 vol% | 48 N | 49 N |
| 3 | 20 vol% | 45 N | 42 N |
| 4 | 30 vol% | 39 N | 38 N |

Then the films for pressure roller were investigated for roughness (Rz) on the outer surface in the axial direction and in the circumferential direction, utilizing a surface roughness measuring instrument Surfcom 480A, manufactured by Tokyo Seimitsu Co. Results are shown in Table 5.

**[Table 5]**

| sample No. | PFA addition amount | axial measurement | circumferential measurement |
|---|---|---|---|
| 1 | 0 vol% | 0.4 µm | 0.1 µm |
| 2 | 10 vol% | 3.2 µm | 2.9 µm |
| 3 | 20 vol% | 3.6 µm | 3.2 µm |
| 4 | 30 vol% | 3.8 µm | 3.7 µm |

Then the films for pressure roller were investigated for roughness (Rz) on the inner surface in the axial direction and in the circumferential direction, utilizing a surface roughness measuring instrument Surfcom 480A, manufactured by Tokyo Seimitsu Co. Results are shown in Table 6.

**[Table 6]**

| sample No. | PFA addition amount | axial measurement | circumferential measurement |
|---|---|---|---|
| 1 | 0 vol% | 0.9 µm | 0.4 µm |
| 2 | 10 vol% | 2.4 µm | 2.3 µm |
| 3 | 20 vol% | 2.8 µm | 2.8 µm |
| 4 | 30 vol% | 3.6 µm | 3.5 µm |

Then the films for pressure roller were investigated for a contact angle (cross-sectional angle of a water drop dropped on a measured surface) at the surface side by a contact angle meter CA-D, manufactured by Kyowa Interface Science Co.
The measurements were executed on a film subjected to surface polishing and a film not subjected to surface polishing. The surface polishing was executed by rotating the film for pressure roller, which is obtained by the above process, at 600 rpm and pressing a polishing film. Results are shown in Table 7.

**[Table 7]**

| sample No. | PFA addition amount | with surface polishing | without surface polishing |
|---|---|---|---|
| 1 | 0 vol% | 73° | - |
| 2 | 10 vol% | 86° | 83° |
| 3 | 20 vol% | 88° | 85° |
| 4 | 30 vol% | 90° | 91 ° |

As will be apparent from the foregoing results, the characteristics required in the film for pressure roller are sufficiently satisfied in the samples of Sample Nos. 2 and 3 which are within the range of the present invention.

## Claims

1. A film for a pressure roller, comprising a polyimide layer in which fluorinated resin powder is dispersed.

2. The film for the pressure roller according to claim 1, wherein the fluorinated resin powder is at least one of polymers and copolymers of a monomer which is vinylidene fluoride, trifluoroethylene, tetrafluoroethylene, tetrafluoropropylene or hexafluoropropylene.

3. The film for the pressure roller according to claim 1 or 2, wherein the fluorinated resin powder is dispersed in an amount of from 10 to 20 vol% in the polyimide layer.

4. The film for the pressure roller according to any one of claims 1 to 3, wherein the fluorinated resin powder has an average particle size of from 1 to 20 µm.

5. The film for the pressure roller according to any one of claims 1 to 4, wherein a thickness of the film for the pressure roller is from 30 to 150 µm.
